# EUROPÄISCHE PATENTSCHRIFT

(11) **EP 2 223 843 B1**
(45) Veröffentlichungstag und Bekanntmachung des Hinweises auf die Patenterteilung: **08.02.2012**
(21) Anmeldenummer: 09179443.8
(22) Anmeldetag: 16.12.2009
(51) Int. Cl.: B62D 25/08, B62D 29/00

(54) **Frontendmodul für Fahrzeuge**
Front end module for vehicles
Module avant pour véhicules

(30) Priorität: 27.02.2009 DE 102009010669
(43) Veröffentlichungstag der Anmeldung: 01.09.2010
(73) Patentinhaber: HBPO GmbH, 59552 Lippstadt (DE)
(72) Erfinder: Opperbeck, Guido, 59558 Lippstadt (DE); Kleinewalter, Karsten, 59558 Lippstadt (DE); Zhao, Gaoming, Dr.-Ing., 59557 Lippstadt (DE); Schöning, Ralf, 33442 Herzebrock-Clarholz (DE)
(74) Vertreter: Ostermann, Thomas

(56) Entgegenhaltungen:
- WO-A1-2006/106230
- FR-A1- 2 911 573

## Beschreibung

Die Erfindung betrifft ein Frontendmodul für Fahrzeuge mit einem Montageträger zur Aufnahme mindestens einer Funktionseinheit des Fahrzeugs, wobei der Montageträger einen oberen Querträger, einen beabstandet zu demselben angeordneten unteren Querträger und einen den oberen Querträger mit dem unteren Querträger verbindenden Verbindungsträger aufweist, dass der obere Querträger und/oder der untere Querträger ein einstückig hergestelltes und geschlossene Metallprofil aufweist enthaltend eine sich in Längsrichtung derselben erstreckende Hohlkammer, dass das geschlossene Metallhohlprofil eine Anlagefläche aufweist über die es mit einem Kunststoffstützteil des Verbindungsträgers verbunden ist.

Aus der DE 10 2005 055 705 B4 ist ein Frontendmodul für Fahrzeuge mit einem Montageträger bekannt, der aus einem oberen Querträger, einem unteren Querträger und einem den oberen und unteren Querträger verbindenden Verbindungsträger besteht. Der Verbindungsträger umfasst zwei Verbindungsstege, die in einem Abstand zueinander angeordnet sind und jeweils den oberen Querträger mit dem unteren Querträger verbinden. Der obere Querträger ist aus einem offenen Metallprofil bzw. im Querschnitt C-förmigen Metallprofil gebildet und durch Kunststoffverrippung verstärkt ausgebildet. Der untere Querträger ist als ein hohlförmiges Metallprofil ausgebildet, das aus einem C-förmigen ersten Profil und einem sich an dem freien Rand desselben anschließenden Verschlusselement besteht. Der metallische Aufbau des bekannten Frontendmoduls, der sich im Grundsatz bewährt hat, weist jedoch den Nachteil auf, dass er zur Erlangung einer erhöhten Steifigkeit ein relativ hohes Gewicht aufweisen muss.

Aus der WO 2006/106230 A1 ist ein Frontendmodul für Fahrzeuge mit einem Montageträger bekannt, der über einen oberen Querträger, einen unteren Querträger und dieselben verbindenden Verbindungsträger verfügt. Der obere Querträger ist als ein Hybridbauteil ausgebildet, das zum einen über ein geschlossenes Metallhohlprofil mit einer in Längsrichtung derselben verlaufenden Hohlkammer und zum anderen eine das Metallhohlprofil teilweise umschließende Kunststoffummantelung verfügt. Die Kunststoffummantelung ist im Querschnitt U-förmig ausgebildet, wobei drei der insgesamt vier Randseiten des Metallhohlprofils als Anlagefläche für die einstückig mit einem Kunststoffstützteil des Verbindungsträgers verbundene Kunststoffummantelung dient. Das Metallhohlprofil ist als ein Blechteil ausgebildet, das durch Hydroformen hergestellt wird. Nachteilig an dem bekannten Querträger ist, dass er in der Herstellung relativ aufwendig ist und zur Erlangung der erforderlichen Steifigkeit über ein relativ hohes Gewicht verfügt.

Aufgabe der vorliegenden Erfindung ist es daher, ein Frontendmodul für Fahrzeuge mit einem Montageträger derart weiterzubilden, dass auf kostengünstige Weise bei gleichbleibender Steifigkeit des Montageträgers das Gewicht desselben verringerbar ist.

Zur Lösung dieser Aufgabe ist die Erfindung in Verbindung mit dem Oberbegriff des Patentanspruchs 1 dadurch gekennzeichnet, dass sich die Anlagefläche ausschließlich auf einer dem Verbindungsträger zugewandten Randseite des Metallhohlprofils erstreckt und dass die Anlagefläche eine Befestigungskontur aufweist, derart, dass das Metallhohlprofil kraftschlüssig und/oder formschlüssig und/oder stoffschlüssig mit dem Kunststoffstützteil verbunden ist.

Nach der Erfindung besteht ein oberer oder unterer Querträger ausschließlich aus einem im Querschnitt geschlossenen Metallhohlprofil, das lediglich über eine einem Kunststoffstützteil des Verbindungsträgers zugewandten Randseite mit demselben kraftschlüssig und/oder formschlüssig und/oder stoffschlüssig verbunden ist. Da der ausschließlich aus einem Metallwerkstoff bestehend Querträger nicht als ein Hybridbauteil ausgebildet ist, kann das Gewicht des Montageträgers wesentlich reduziert werden. Das Metallhohlprofil weist lediglich auf einer dem Kunststoffstützteil zugewandten Seite eine Befestigungskontur auf, so dass eine zuverlässige und feste Verbindung zu dem Kunststoffstützteil des Verbindungsträgers gewährleistet ist. Das Kunststoffmaterial im Befestigungsbereich dient somit lediglich zur festen Verbindung zwischen dem Querträger und dem Verbindungsträger.

Nach einer bevorzugten Ausführungsform der Erfindung ist das Metallhohlprofil als ein Strangpressprofil vorzugsweise aus einem Aluminiummaterial hergestellt. Vorteilhaft können durch das Strangpressprofil auf einfache Weise komplexe Profilquerschnitte hergestellt werden, die zur Verbindung mit dem anschließenden Verbindungsträger genutzt werden können.

Nach einer Weiterbildung der Erfindung weisen das Metallhohlprofil und das Kunststoffstützteil auf einer zueinander gekehrten Seite mindestens eine Vertiefung und/oder einen Vorsprung auf, die zur Befestigung des Metallhohlprofils an dem Kunststoffstützteil ineinandergreifen und stoffschlüssig miteinander verbunden sind. Vorzugsweise ist das Kunststoffstützteil im Befestigungsbereich an die Befestigungskontur des Metallhohlprofils angespritzt. Alternativ kann die Verbindung auch durch Klebung erfolgen.

Nach einer Weiterbildung der Erfindung sind die Vertiefung und der Vorsprung des Metallhohlprofils bzw. des Kunststoffstützteils leistenförmig bzw. langgestreckt in Längsrichtung des Metallhohlprofils ausgebildet. Auf diese Weise kann eine feste und innige Verbindung über die gesamte Länge des Querträgers erfolgen.

Nach einer Weiterbildung der Erfindung kann sich die Befestigungskontur des im Querschnitt rechteckförmig ausgebildeten Metallhohlprofils an einer dem Kunststoffstützteil zugewandten Unterseite oder in einem Eckbereich zwischen der Unterseite und einer benachbarten Schmalseite angeordnet sein. Die Anbindung des Kunststoffstützteils an den Querträger erfolgt somit lediglich in einem Teilbereich einer Unterseite bzw. Schmalseite des Metallhohlprofils. Der Befestigungsbereich kann somit in Abhängigkeit von den Bauraumerfordernissen unterschiedlich angeordnet sein.

Nach einer Weiterbildung der Erfindung weist das Kunststoffstützteil auf einer dem Metallhohlprofil abgewandten Seite des als Vorsprung oder Vertiefung ausgebildeten Befestigungselementes eine Fußfläche auf, die an dem Metallhohlprofil anliegt und somit das Metallhohlprofil an der Unterseite weiter abstützt. Aufgrund der vorgegebenen Tiefe der korrespondierenden Vertiefung und des Vorsprungs ist die Breite der Fußfläche vorzugsweise kleiner als eine halbe Breite des Metallhohlprofils.

Nach einer Weiterbildung der Erfindung ist eine Tiefe der Befestigungsmittel des Metallhohlprofils und des Kunststoffstützteils und/oder eine Anzahl der Befestigungsmittel in Abhängigkeit von einer Breite des Metallhohlprofils vorgesehen. Damit ist gewährleistet, dass eine innige und feste Verbindung zwischen dem Metallhohlprofil und dem benachbarten Kunststoffstützteil gewährleistet ist.

Weitere Vorteile der Erfindung ergeben sich aus den weiteren Unteransprüchen.

Ausführungsbeispiele der Erfindung werden nachfolgend anhand der Figuren näher erläutert.

Es zeigen:

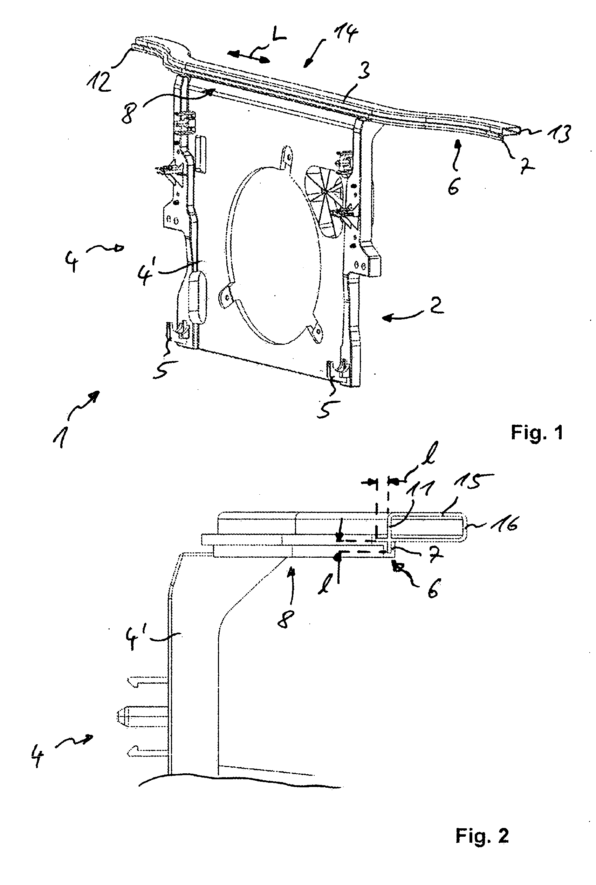

- Figur 1: eine perspektivische Vorderansicht eines Front- endmoduls mit einem oberen Querträger, der aus einem Metallhohlprofil nach einer ersten Ausfüh- rungsform besteht,
- Figur 2: eine Seitenansicht in einem oberen Bereich des Frontendmodulträgers nach Figur 1,

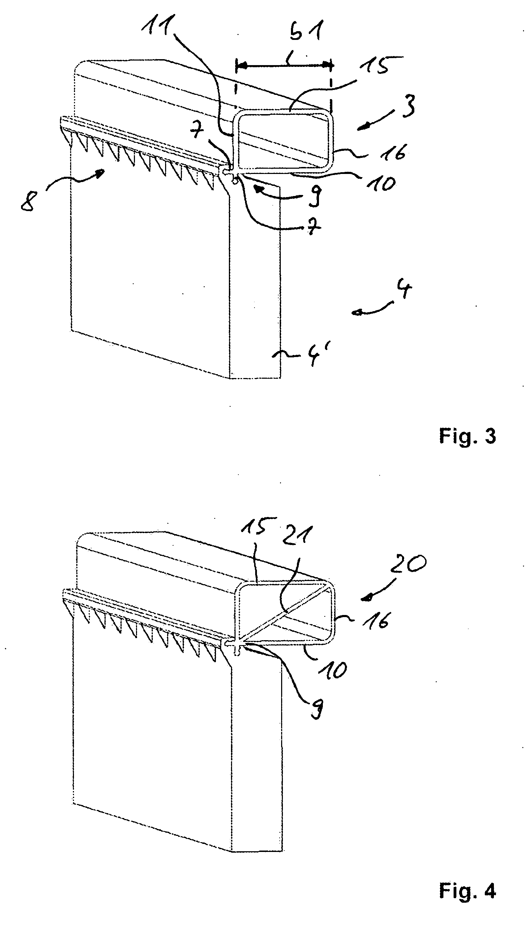

- Figur 3: eine perspektivische Seitenansicht eines oberen Querträgers mit einer Profilierung nach einer ersten Ausführungsform, wobei an einer Randseite des Metallhohlprofils abragende leistenförmige Vorsprünge (Befestigungsstege) von einem Kunst- stoffmaterial des Kunststoffstützteils des be- nachbarten Verbindungsträgers umspritzt sind,
- Figur 4: eine perspektivische Seitenansicht eines oberen Querträgers mit einer Profilierung nach einer zweiten Ausführungsform, wobei an einer Randsei- te des Metallhohlprofils abragende leistenförmi- ge Vorsprünge (Befestigungsstege) von einem Kunststoffmaterial des Kunststoffstützteils des benachbarten Verbindungsträgers umspritzt sind,

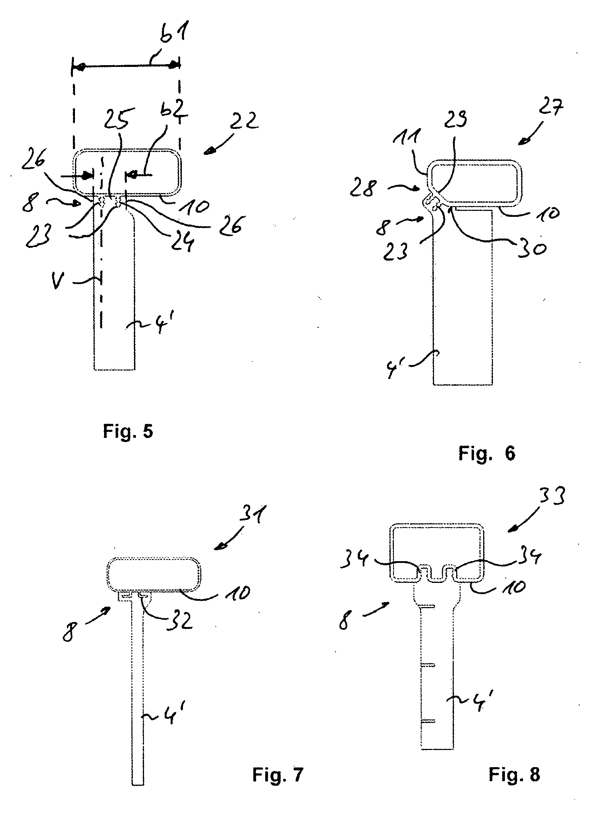

- Figur 5: eine Seitenansicht eines oberen Querträgers mit einer Profilierung nach einer dritten Ausfüh- rungsform, wobei an einer Unterseite des Metall- hohlprofils abragende leistenförmige Vorsprünge (Befestigungsstege) von einem Kunststoffmaterial des Kunststoffstützteils des benachbarten Ver- bindungsträgers umspritzt sind,
- Figur 6: eine Seitenansicht eines oberen Querträgers mit einer Profilierung nach einer vierten Ausfüh- rungsform, wobei in einem Eckbereich des Metall- hohlprofils abragende leistenförmige Vorsprünge (Befestigungsstege) mit einem Kunststoffmaterial des Kunststoffstützteils des benachbarten Ver- bindungsträgers umspritzt sind,
- Figur 7: eine Seitenansicht eines oberen Querträgers mit einer Profilierung nach einer fünften Ausfüh- rungsform, wobei an einer Unterseite des Metall- hohlprofils abragende winkelförmige Befesti- gungsleisten (Befestigungsstege) von einem Kunststoffmaterial des Kunststoffstützteils des benachbarten Verbindungsträgers umspritzt sind,
- Figur 8: eine Seitenansicht eines oberen Querträgers mit einer Profilierung nach einer sechsten Ausfüh- rungsform, wobei an einer Unterseite des mit ei- ner leistenförmige Vertiefung versehenen Me- tallhohlprofils von einem Kunststoffmaterial des Kunststoffstützteils des benachbarten Verbin- dungsträgers angespritzt sind,

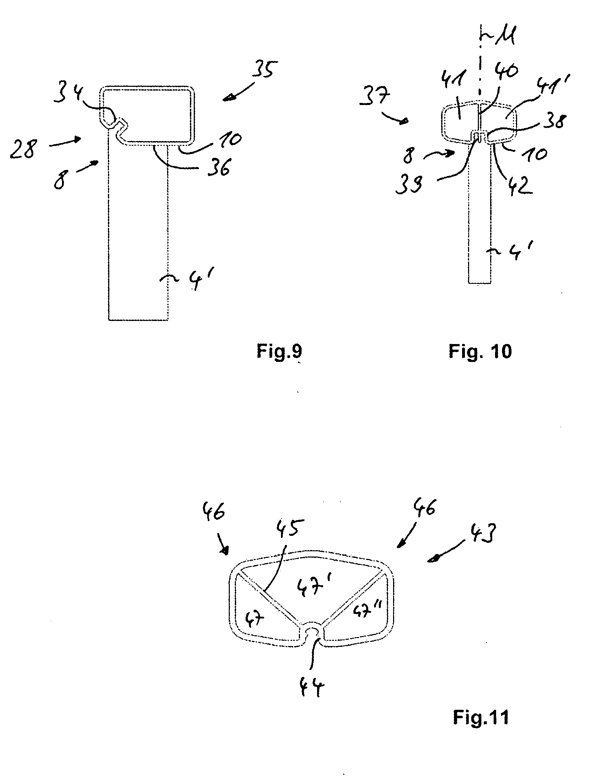

- Figur 9: eine Seitenansicht eines oberen Querträgers mit einer Profilierung nach einer siebten Ausfüh- rungsform, wobei eine in einem Eckbereich des Metallhohlprofils angeordnete leistenförmige Vertiefung von einem Kunststoffmaterial des Kunststoffstützteils des benachbarten Verbin- dungsträgers angespritzt ist,
- Figur 10: eine Seitenansicht eines oberen Querträgers mit einer Profilierung nach einer achten Ausfüh- rungsform, wobei an einer Randseite des Metall- hohlprofils eine in einer Vertiefung angeordnete Befestigungsleiste von einem Kunststoffmaterial des Kunststoffstützteils des benachbarten Ver- bindungsträgers umspritzt ist und wobei inner- halb des Metallhohlprofils zwei Hohlkammern ge- bildet sind,
- Figur 11: eine Seitenansicht eines oberen Querträgers mit einer Profilierung nach einer neunten Ausfüh- rungsform mit zwei Stützstreben innerhalb des Metallhohlprofils zur Bildung von drei Hohlkam- mern,

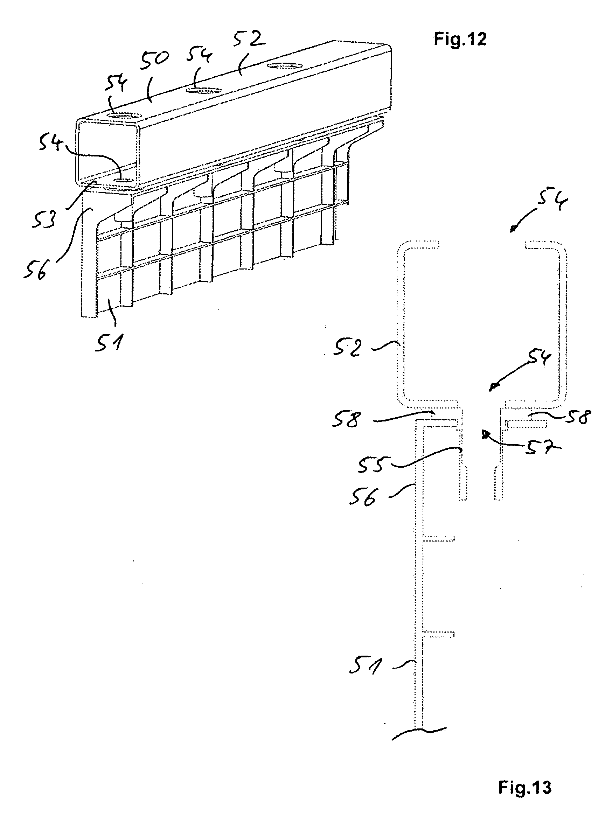

- Figur 12: eine perspektivische Seitenansicht eines Metall- hohlprofils nach einer weiteren Ausführungsform, wobei das Metallhohlprofil in einer Längsmit- telsebene desselben über Verschraubung mit dem Kunststoffstützteil verbunden ist,
- Figur 13: einen Querschnitt durch das Metallhohlprofil ge- mäß Figur 12,

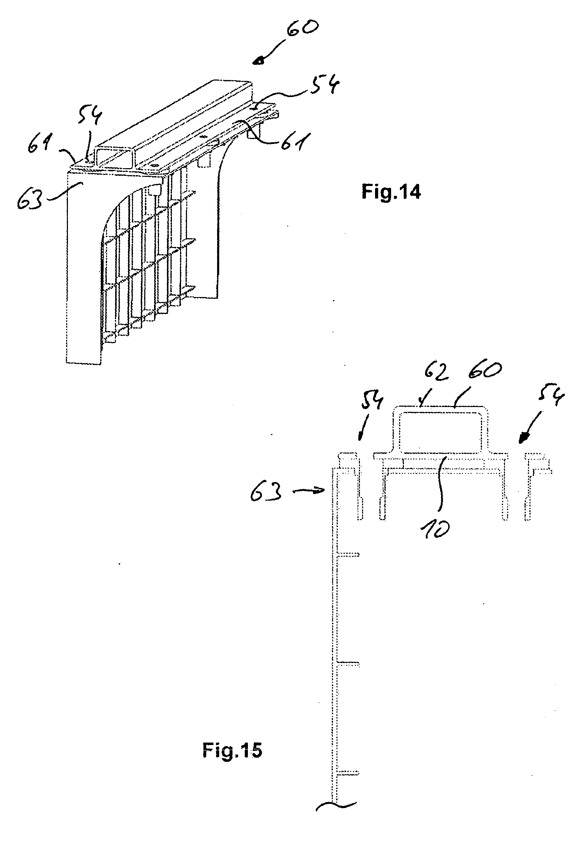

- Figur 14: eine perspektivische Seitenansicht eines Metall- hohlprofils nach einer weiteren Ausführungsform mit seitlichen Befestigungsflanschen, über die es durch Verschraubung mit dem Kunststoffstütz- teil verbunden ist und

- Figur 15: einen Querschnitt durch das Metallhohlprofil ge- mäß Figur 14.

Ein Frontendmodul 1 für Fahrzeuge ist an einem nicht dargestellten Längsträger desselben im Vorderseitenbereich des Fahrzeugs befestigt. Der Längsträger kann beispielsweise als eine Kotflügelbank (Seitenteil) oder als mittlere Längsträgerenden ausgebildet sein. Das Frontendmodul 1 erstreckt sich im Wesentlichen über die gesamte Breite des Fahrzeugs und weist einen Montageträger 2 auf, der zur Aufnahme von Bauteilen (Funktionsbauteilen) des Fahrzeugs, beispielsweise eines Stoßfängerbauteils, eines Kühlmoduls und/oder eines Scheinwerfers dient.

Der Montageträger 2 weist einen oberen Querträger 3, eine sich an einer Unterseite desselben anschließenden Verbindungsträger 4 und einen sich an einer Unterseite des Verbindungsträgers 4 sich anschließenden, nicht dargestellten unteren Querträger auf. Der Verbindungsträger 4 ist in den vorliegenden Ausführungsbeispielen als eine Verbindungsträgerfläche ausgebildet, die an einer Vorderseite Befestigungshaken 5 zur Aufnahme des nicht dargestellten Kühlmoduls aufweist. Alternativ kann der Verbindungsträger 4 lediglich Vertikalstege oder -streben aufweisen, die den unteren Querträger mit dem oberen Querträger 3 verbinden, siehe beispielsweise DE 10 2006 061 522 A1. Alternativ kann die Verbindungsfläche 4' auch in mehreren Ebenen angeordnet sein, beispielsweise Stufen oder Absätze aufweisen.

Der obere Querträger 3 ist als ein einstückig hergestelltes und geschlossenes Metallhohlprdfil ausgebildet, das an einer dem Verbindungsträger 4 zugewandten Randseite 6 Befestigungsmittel 7 aufweist zur Anbindung an ein Kunststoffstützteil 8 des Verbindungsträgers 4. Das Metallhohlprofils ist vorzugsweise als ein aus Aluminium bestehendes Strangpressprofil ausgebildet, dessen dem Kunststoffstützteil 8 zugewandte Teil der Randseite 6 derart mit einer Befestigungskontur versehen ist, dass das Metallhohlprofil 3 mit dem Verbindungsträger 4 kraftschlüssig oder formschlüssig oder stoffschlüssig verbindbar ist.

Nach einer ersten Ausführungsform der Erfindung gemäß den Figuren 1 und 2 ist der obere Querträger 3 im Querschnitt rechteckförmig ausgebildet und weist in einem Eckbereich 9 zwei senkrecht zueinander verlaufende Vorsprünge 7 als Befestigungsmittel auf. Die Vorsprünge 7 verlaufen jeweils als Verlängerung einer Unterseite 10 bzw. seitlichen Schmalseite 11 und weisen eine solche Länge 1 auf, dass durch Umspritzung derselben mit einem Kunststoffmaterial eine feste und langzeitstabile Anbindung geschaffen wird zu dem benachbarten Kunststoffstützteil 8 des Verbindungsträgers 4.

Wie aus Figur 2 zu ersehen ist, erstreckt sich das Kunststoffstützteil 8 durchgehend von einem ersten Ende 12 des oberen Querträgers 3 zu einem gegenüberliegenden zweiten Ende 13 desselben.

Nach einer nicht dargestellten alternativen Ausführungsform der Erfindung kann sich das Kunststoffstützteil 8 auch lediglich in einem mittleren Bereich 14 des oberen Querträgers 3 erstrecken, in dem sich die Verbindungsträgerfläche 4 untenseitig des oberen Querträgers 3 anschließt.

Wie aus Figur 2 ersichtlich ist, ist weder die Unterseite 10, noch eine gegenüberliegende parallel verlaufende Oberseite 15 noch die erste Schmalseite 11 und die zweite Schmalseite 16 des Metallhohlprofils 3 von Kunststoffmaterial angespritzt. Lediglich die winkelförmigen und im Eckbereich 9 nach außen hin abragenden Vorsprünge 7 sind von dem Kunststoffmaterial des Kunststoffstützteils 8 umspritzt. Das Kunststoffstützteil 8 erstreckt sich parallel zu dem Metallhohlprofil 3. Es weist im Montagezustand eine zu den leistenförmigen Vorsprüngen 7 korrespondierende Vertiefung auf, die eine stoffschlüssige Verbindung ermöglicht.

Nach einer nicht dargestellten alternativen Ausführungsform können die Vorsprünge 7 bzw. Vertiefungen auch in einer Längsrichtung L des oberen Querträgers 3 unterbrochen angeordnet sein.

Das leistenförmige Kunststoffstützteil 8 bildet einen Kopplungsabschnitt des Verbindungsträgers 4, der eine feste Anbindung des oberen Querträgers 3 an die lediglich in dem mittleren Bereich 14 verlaufende Verbindungsträgerfläche 4' ermöglicht.

Wie aus Figur 2 zu ersehen ist, erstreckt sich die Verbindungsfläche 4' im Wesentlichen in Fahrtrichtung F des Fahrzeugs vor dem oberen Querträger 3. Nach einer alternativen Ausführungsform der Erfindung gemäß Figur 3 kann sich eine Verbindungsträgerfläche 17 des Verbindungsträgers 4 auch im Wesentlichen unterhalb des oberen Querträgers 3 erstrecken. Entlang eines Kunststoffstützteils 18 sind an einer Vorderseite desselben Stützstreben 19 angeformt.

Gleiche Bauteile bzw. Bauteilfunktionen der Ausführungsbeispiele der Erfindung sind mit den gleichen Bezugszeichen versehen.

Das in den Figuren 1 bis 3 dargestellte Metallhohlprofil 3 ist als ein Einkammer-Hohlprofil ausgebildet und weist eine Unterseite 10 und eine Oberseite 15 mit einer Breite b1 auf, die größer ist als eine Breite der gegenüberliegenden Schmalseiten 11, 16.

Nach einer alternativen Ausführungsform des Montageträgers 2 kann ein Metallhohlprofil 20 vorgesehen sein, das im Unterschied zu dem Metallhohlprofil 3 der vorhergehenden Ausführungsbeispiele zusätzlich eine diagonale Stützstrebe 21 aufweist, die sich von dem Eckbereich 9, in dem die Anbindung an den Verbindungsträger 4 erfolgt, und einem gegenüberliegenden Eckbereich zwischen der Oberseite 15 und der zweiten Schmalseite 16 erstreckt. Vorteilhaft kann hierdurch die Steifigkeit des oberen Querträgers 3 weiter erhöht werden.

Nach einer alternativen Ausführungsform des oberen Querträgers 3 gemäß Figur 5 ist ein Metallhohlprofil 22 vorgesehen, das an der Unterseite 10 zwei leistenförmige Vorsprünge 23 aufweist, die in einem Abstand zueinander angeordnet sind. Die Vorsprünge 23 sind als in Längsrichtung des oberen Querträgers 3 verlaufende Streben ausgebildet, die derart konturiert sind, dass sie entgegen der Unterseite 10 des Metallhohlprofils 22 gesetzten Richtung eine Anzahl von Widerhaken 24 aufweisen. Vorteilhaft kann hierdurch die innige und feste Verbindung zu dem Kunststoffstützteil 8 verbessert werden. Wie in den vorhergehenden Ausführungsbeispielen ragen von dem Metallhohlprofil 22 zwei leistenförmige Vorsprünge 23 ab. Im vorliegenden Ausführungsbeispiel sind die Vorsprünge 23 jedoch parallel zueinander angeordnet, wobei deren Länge 1 und der Abstand zueinander derart gewählt ist, dass eine feste und innige Verbindung zwischen dem oberen Querträger 3 und dem Verbindungsträger 4 ermöglicht wird.

Nach einer nicht dargestellten alternativen Ausführungsform kann das Metallhohlprofil 22 lediglich über einen einzigen Vorsprung verfügen, der allerdings weiter von der Unterseite 10 des Metallhohlprofils 22 abragt als die dargestellten Vorsprünge 23.

Die Anzahl und die Länge der abragenden Vorsprünge 23 ist abhängig von der Erstreckung des Metallhohlprofils 22 bzw. der Breite b1 der Unterseite 10 desselben. Im vorliegenden Ausführungsbeispiel ist lediglich ein kleiner Bereich der Unterseite 10 des Metallhohlprofils 22 von einer Fußfläche 25 des Kunststoffstützteils 8 bedeckt. Die Fußfläche 25 des Kunststoffstützteils 8 erstreckt sich mit einem Abstand b2 zwischen gegenüberliegenden Randkanten 26 derselben, der kleiner ist als die halbe Breite b1 der Unterseite 10 des Metallhohlprofils 22.

Wie aus Figur 5 zu ersehen ist, weisen die leistenförmigen Vorsprünge 23 jeweils eine Längsmittelebene V auf, die quer zur Unterseite 10 des Metallhohlprofils 22 verläuft.

Nach einer weiteren Ausführungsform der Erfindung gemäß Figur 6 kann der obere Querträger 3 ein Metallhohlprofil 27 aufweisen, das in einem unteren Eckbereich 28 abgeflacht ausgebildet ist. Eine Schrägfläche 29 im Eckbereich 28 verbindet die Unterseite 10 mit der ersten Schmalseite 11 des Metallhohlprofils 27. Von der Schrägfläche 29 ragen die parallelen Vorsprünge 23 ab. Eine Fußfläche 30 des Kunststoffstützteils 8 erstreckt sich unter Anlage an der Schrägfläche 29 sowie eines Randabschnitts der Unterseite 10 des Metallhohlprofils 27. Die Verbindungsträgerfläche 4' erstreckt sich im Wesentlichen unterhalb des Metallhohlprofils 27.

Nach einer weiteren Ausführungsform der Erfindung gemäß Figur 7 kann ein Metallhohlprofil 31 flügelförmige oder winkelförmige Befestigungsleisten 32 (Vorsprünge) aufweisen, die von der Unterseite 10 desselben abragen. Durch Umspritzen der Befestigungsleisten 32 erfolgt eine feste Verbindung des oberen Querträgers 3 mit der Verbindungsträgerfläche 4' über das Kunststoffstützteil 8.

Nach einer weiteren Ausführungsform der Erfindung gemäß Figur 8 kann ein Metallhohlprofil 33 vorgesehen sein, das an der Unterseite 10 zwei leistenförmige Vertiefungen 34 aufweist, so dass das Kunststoffstützteil 8 durch Anspritzen mit dem Metallhohlprofil 33 verbunden ist.

Nach einer weiteren Ausführungsform der Erfindung gemäß Figur 9 kann ein Metallhohlprofil 35 vorgesehen sein, dessen Vertiefung 34 in dem Eckbereich 28 angeordnet ist. Eine Fußfläche 36 des Kunststoffstützteils 8 erstreckt sich hierbei im Eckbereich 28 und an der Unterseite 10 des Metallhohlprofils 35.

Nach einer weiteren Ausführungsform der Erfindung gemäß Figur 10 ist ein Zweikammer-Metallhohlprofil 37 vorgesehen, das an der Unterseite 10 eine Vertiefung 38 (Nut) aufweist, von deren Grundseite ein Vorsprung 39 (Befestigungsleiste) abragt. Der freie Rand der Befestigungsleiste 39 schließt im Wesentlichen mit der Unterseite 10 des Metallhohlprofils 37 ab. In Verlängerung des Vorsprungs 39 ist eine Stützstrebe 40 vorgesehen, die eine erste Hohlkammer 41 von einer benachbarten Hohlkammer 41' des Metallhohlprofils 37 trennt. Das Metallhohlprofil 37 und die Befestigungsmittel 38, 39 desselben sind symmetrisch zu einer Längsmittelebene M des Metallhohlprofils 37 angeordnet. Das Kunststoffstützteil 8 schließt unter Anlage von zueinander gekehrten Randkanten 42 der Unterseite 10 und unter Anlage in den Vertiefungen 38 untenseitig an das Metallhohlprofil 37 an.

Nach einer weiteren Ausführungsform der Erfindung gemäß Figur 11 kann ein Metallhohlprofil 43 auch lediglich eine mittlere Vertiefung (Nut 44) aufweisen, wobei innenseitig des Metallhohlprofils 43 Stützstreben 45 diagonal von der Vertiefung 44 zu einem oberen Eckbereich 46 desselben verlaufen. Es werden somit drei Hohlkammern 47, 47', 47" gebildet.

Die vorher beschriebenen Ausführungsformen der Erfindung weisen als Befestigungsmittel Vertiefungen oder Vorsprünge des Metallhohlprofils auf, die an- bzw. umspritzt werden. Die Befestigung erfolgt somit lokal in einem Eckbereich bzw. an einer Unterseite des Metallhohlprofils.

Nach alternativen Ausführungsformen der Erfindung gemäß den Figuren 12 und 13 kann die Verbindung zwischen einem im Querschnitt rechteckförmigen Metallhohlprofil 50 und einem Verbindungsträger 51 auch durch Schrauben erfolgen. Das Metallhohlprofil 50 weist an einer Oberseite 52 und einer Unterseite 53 jeweils zueinander fluchtende Bohrungen 54 auf, so dass eine nicht dargestellte Schraube von oben in einen Gewindeabschnitt 55 des Kunststoffstützteils 56 einführbar ist zur Festlegung des Metallhohlprofils 50 an dem Kunststoffstützteil 56. Zu diesem Zweck weist das Kunststoffstützteil 56 ebenfalls eine fluchtende Ausnehmung 57 auf, in die der metallische Gewindeabschnitt 55 nach Herstellung des Kunststoffstützteils 56 einsetz- und fest anbringbar ist. Der Gewindeabschnitt 55 weist seitliche Laschen 58 auf, die mit einer Oberseite des Kunststoffstützteils 56 stoffschlüssig verbunden sind (beispielsweise durch Verkleben) oder kraftschlüssig (beispielsweise durch Verklemmen). In Längsrichtung des Metallhohlprofils 50 ist in vorgegebenen Abständen eine Anzahl von Durchgangsbohrungen 54 bzw. Gewindeabschnitten 55 vorgesehen.

Nach einer alternativen Ausführungsform gemäß den Figuren 14 und 15 kann ein Metallhohlprofil 60 vorgesehen sein, das seitlich und in Verlängerung der Unterseite 10 Befestigungsflansche 61 mit den Durchgangsbohrungen 54 aufweist. Bei dieser Ausführungsform ist eine Durchgangsbohrung an einer Oberseite 62 des Metallhohlprofils 60 nicht erforderlich. Stattdessen muss ein Kunststoffstützteil 63 breiter ausgebildet sein als das Kunststoffstützteil 56 gemäß den Figuren 12 und 13.

Nach einer nicht dargestellten Ausführungsform der Erfindung können die Befestigungsmittel des Metallhohlprofils und des Kunststoffstützteils auch derart ausgebildet sein, dass dieselben durch Verrasten (Aufklipsen) miteinander verbindbar sind.

## Patentansprüche

1. Frontendmodul (1) für Fahrzeuge mit einem Montageträger (2) zur Aufnahme mindestens einer Funktionseinheit des Fahrzeugs, wobei der Montageträger (2) einen oberen Querträger (3), einen beabstandet zu demselben angeordneten unteren Querträger und einen den oberen Querträger mit dem unteren Querträger verbindende Verbindungsträger (4) aufweist, dass der obere Querträger (3) und/oder der untere Querträger ein einstückig hergestelltes und geschlossene Metallhohlprofil aufweist enthaltend eine sich in Längsrichtung derselben erstreckende Hohlkammer, dass das geschlossene Metallhohlprofil eine Anlagefläche aufweist über die es mit einem Kunststoffstützteil des Verbindungsträgers (4) verbunden ist, **dadurch gekennzeichnet, dass** sich die Anlagefläche ausschließlich auf einer dem Verbindungsträger (4) zugewandten Randseite (6) des Metallhohlprofils (3, 10, 20, 22, 27, 31, 33, 35, 37, 43, 50, 60) erstreckt und dass die Anlagefläche eine Befestigungskontur aufweist, derart, dass das Metallhohlprofil (3, 10, 20, 22, 27, 31, 33, 35, 37, 43, 50, 60) kraftschlüssig und/oder formschlüssig und/oder stoffschlüssig mit dem Kunststoffstützteil (8, 18, 56, 63) verbunden ist.

2. Frontendmodul nach Anspruch 1, **dadurch gekennzeichnet, dass** Metallhohlprofil (3, 10, 20, 22, 27, 31, 33, 35, 37, 43, 50, 60) als ein Strangpressprofil ausgebildet ist, das mindestens eine in Längsrichtung (L) desselben verlaufende Hohlkammer (41, 41'; 47, 47', 47") aufweist.

3. Frontendmodul nach Anspruch 1 oder 2, **dadurch gekennzeichnet, dass** das Metallhohlprofil (3, 10, 20, 22, 27, 31, 33, 35, 37, 43, 50, 60) und das Kunststoffstützteil (8, 18, 56, 63) auf einer zueinander gekehrten Seite mindestens eine zueinander korrespondierende Vertiefung (34, 38, 44) und/oder einen Vorsprung (23, 39) aufweisen, wobei der Vorsprung (23, 39) in der Vertiefung (34, 38, 44) stoffschlüssig befestigt ist.

4. Frontendmodul nach Anspruch 3, **dadurch gekennzeichnet, dass** die Vertiefung (34, 38, 44) und der Vorsprung (23, 39) des Metallhohlprofils (3, 10, 20, 22, 27, 31, 33, 35, 37, 43, 50, 60) bzw. des Kunststoffstützteils (8, 18, 56, 63) leistenförmig in Längsrichtung (L) des Metallhohlprofils (3, 10, 20, 22, 27, 31, 33, 35, 37, 43, 50, 60) verlaufen.

5. Frontendmodul nach einem der Ansprüche 1 bis 4, **dadurch gekennzeichnet, dass** sich die Befestigungskontur des rechteckförmigen Metallhohlprofils (3, 10, 20, 22, 27, 31, 33, 35, 37, 43, 50, 60) an einer dem Kunststoffstützteil (8, 18, 56, 63) zugewandten Unterseite (10) oder in einem Eckbereich (28) zwischen der Unterseite (10) und einer benachbarten Schmalseite (11) erstreckt.

6. Frontendmodul nach Anspruch 4, **dadurch gekennzeichnet, dass** im Bereich des leistenförmigen Vorsprungs (23, 39) oder der leistenförmigen Vertiefung (34, 38, 44) des Metallhohlprofils (3, 10, 20, 22, 27, 31, 33, 35, 37, 43, 50, 60) das Kunststoffstützteil (8, 18, 56, 63) mit einer Fußfläche (25) an der Unterseite (10) und/oder der Schrägfläche (29) des Metallhohlprofils (3, 10, 20, 22, 27, 31, 33, 35, 37, 43, 50, 60) anliegt, die schmaler ist als eine Breite (b1) der Unterseite (10) des Metallhohlprofils (3, 10, 20, 22, 27, 31, 33, 35, 37, 43, 50, 60).

7. Frontendmodul nach Anspruch 6, **dadurch gekennzeichnet, dass** die Fußfläche (25) des Kunststoffstützteils (8, 18, 56, 63) in Längsrichtung verlaufende seitliche Randkanten (26) aufweist, deren Abstand (b2) zueinander kleiner ist als die halbe Breite (b1) der Unterseite (10) des Metallhohlprofils (22).

8. Frontendmodul nach Anspruch 3, **dadurch gekennzeichnet, dass** eine quer zu dem Metallhohlprofil (3, 10, 20, 22, 27, 31, 33, 35, 37, 43, 50, 60) verlaufende Länge (1) der Vertiefung (34, 38, 44) und/oder des Vorsprungs (23, 39) desselben und/oder einer Anzahl Vertiefungen (34, 38, 44) und/oder Vorsprünge (23, 39) desselben in Abhängigkeit von einer Breite (b1) des Metallhohlprofils (3, 10, 20, 22, 27, 31, 33, 35, 37, 43, 50, 60) vorgesehen ist.

9. Frontendmodul nach Anspruch 4, **dadurch gekennzeichnet, dass** die leistenförmige Vertiefung (34, 38, 44) und/oder der leistenförmige Vorsprung (23, 39) des Metallhohlprofils (3, 10, 20, 22, 27, 31, 33, 35, 37, 43, 50, 60) mit Widerhaken (24) versehen ist.

10. Frontendmodul nach Anspruch 3, **dadurch gekennzeichnet, dass** eine Längsmittelebene (V) des Vorsprungs (23, 39) bzw. der Vertiefung (34, 38, 44) des Metallhohlprofils (3, 10, 20, 22, 27, 31, 33, 35, 37, 43, 50, 60) quer zur Unterseite desselben verläuft.

11. Frontendmodul nach Anspruch 3, **dadurch gekennzeichnet, dass** die Vertiefung (34, 38, 44) und/oder der Vorsprung (23, 39) des Metallhohlprofils (50, 60) derart ausgebildet ist, dass das Metallhohlprofil (50, 60) durch Rastung oder durch Verschraubung mit dem Kunststoffstützteil (56, 63) verbunden ist.

## Claims

1. Front end module (1) for vehicles having a mounting support (2) to accommodate at least one functional unit of the vehicle which support (2) comprises an upper cross-member (3), a lower cross-member (4)spaced from said latter and a connecting member (4) to connect the upper to the lower cross-member wherein the upper cross-member (3) and/or the lower cross-member (4) is a one-piece closed metallic hollow profile which comprises a hollow chamber extending in a longitudinal direction thereof and wherein said closed metallic hollow profile has a contract face for connection to a plastic support element of said connecting member (4), **characterized in that** said contact fact extends exclusively on a marginal side (6) of the metallic hollow profile (3, 10, 20, 22, 27, 31, 33, 35, 37, 43, 50, 60) that is facing the connecting member (4) and that said contact face has a fixing structure of a type permitting the metallic hollow profile (3, 10, 20, 22, 27, 31, 33, 35, 37, 43, 50, 60) tao be connected to the plastic support member (8, 18, 56, 63) in a non-positive and/or positive and/or plastic embedded way.

2. Front end module according to Claim 1, **characterized in that** the metallic hollow profile (3, 10, 20, 22, 27, 31, 33, 35, 37, 43, 50, 60) is an extruded section that comprises at least one hollow chamber (41, 41'; 47, 47', 47") extending in a longitudinal direction (L) thereof.

3. Front end module according to Claim 1 or 2, **characterized in that** on one of its opposing sides the metallic hollow profile (3, 10, 20, 22, 27, 31, 33, 35, 37, 43, 50, 60) and the plastic support member (8, 18, 56, 63) have at least one cavity (34, 38, 44) and/or one projecting part 23, 39) adapted to mate with said cavity wherein said projecting part (23, 39) is embedded into the material of the cavity (34, 38, 44).

4. Front end module according to Claim 3, **characterised in that** said cavity (34, 38, 44) and said projecting part (23, 39) of the metallic hollow profile (3, 10, 20, 22, 27, 31, 33, 35, 37, 43, 50, 60) and/or the plastic support member (8, 18, 56, 63) are strip-shaped and extend in a longitudinal direction (L) of the metallic hollow profile (3, 10, 20, 22, 27, 31, 33, 35, 37, 43, 50, 60).

5. Front end module according to any of the preceding Claims 2 to 4, **characterized in that** the fixing structure of the rectangular metallic hollow profile (3, 10, 20, 22, 27, 31, 33, 35, 37, 43, 50, 60) extends on an underside (10) facing the elastic support member (8, 18. 56, 63) or a corner arena (28) between said underside (10) and an adjacent narrow side (11).

6. Front end module according to Claim 4, **characterized in that** in the area of the strip-shapcd projecting part (23, 39) or the strip-shaped cavity (34, 38, 44) of the metallic hollow profile (3, 10, 20, 22, 27, 31, 33, 35, 37, 43, 50, 60) the plastic support member (25) contacts said underside (10) and/or an angular face (29) of the metallic hollow profile (3, 10, 20, 22, 27, 31, 33, 35, 37, 43, 50, 60) by a lower end face (25) which is smaller than a width (b1) of said underside (10) of the metallic hollow profile (3, 10, 20, 22, 27, 31, 33, 35, 37, 43, 50, 60).

7. Front end module according to Claim 6, **characterized in that** the lower end face (25) of the plastic support member (8, 18, 56, 63) has lateral marginal edges (26) that extend in longitudinal direction and whose relative spacing (b2) is smaller than half the width (b1) of the underside (10) of the metallic hallow profile (22).

8. Front end module according to Claim 3, **characterized in that** a length (1) of the cavity (34, 38, 44) and/or of the projecting part (23, 39) and/or of a number of cavities (34, 38, 44) and/or a number of projecting parts (23, 39) thereof that extends cross to said metallic hollow profile (3, 10, 20, 22, 27, 31, 33, 35, 37, 43, 50, 60) is provided dependent on a width (b1) of said metallic hollow profile (3, 10, 20, 22, 27, 31, 33, 35, 37, 43, 50, 60).

9. Front end module according to Claim 4, **characterised in that** the strip-shaped cavity (34, 38, 44) and/or the strip-shaped projecting part (23, 39) of the metallic hollow profile (3, 10, 20, 22, 27, 31, 33, 35, 37, 43, 50, 60) is provided with barbs (24).

10. Front end module according to Claim 3, **characterized in that** a longitudinal center plane (V) of the projecting part (23, 39) and/or of the cavity (34, 38, 44) of the metallic hollow profile (3, 10, 20, 22, 27, 31, 33, 35, 37, 43, 50, 60) extends cross to the underside thereof.

11. Front end module according to Claim 3, **characterized in that** the cavity (34, 38, 44) and/or the projecting part (23, 39) of the metallic hollow profile (50, 60) is designed such that said hollow profile 50 is connected to the plastic support member (56, 63) by snap action or screw joint.

## Revendications

1. Module avant (1) pour véhicule automobile, avec un support de montage (2), qui est destiné à recevoir une unité fonctionnelle dudit véhiculé automobile, sachant que ledit support de montage (2) présente une traverse supérieure (3), une traverse inférieure, disposé à distance de la traverse supérieure, et un support de liaison (4), qui relie le traverse supérieure à la traverse inférieure, que la traverse supérieure (3) et / ou la traverse inférieure présente/nt un profilé métallique creux, fabriqué d'une pièce et fermé, qui contient une chambre creuse s'étendant dans la direction longitudinale de celui-ci, que le profilé métallique creux, fermé présente une surface de contact au moyen de laquelle il est relié à une pièce d'appui en matière synthétique du support de liaison (4), **caractérisé en ce que** la surface de contact s'étend exclusivement sur une face marginale (6) du profilé métallique creux (3, 10, 20, 22, 27, 31, 33, 35, 37, 43, 50, 60), qui est orientée vers le support de liaison (4), et que la surface de contact présente un contour de fixation tel que le profilé métallique creux (3, 10, 20, 22, 27, 31, 33, 35, 37, 43, 50, 60) puisse être relié à la pièce d'appui en matière synthétique (8, 18, 56, 63) par adhérence et / ou par emboîtement et / ou par fusion de matière.

2. Module avant selon la revendication 1, **caractérisé en ce que** le profilé métallique creux (3, 10, 20, 22, 27, 31, 33, 35, 37, 43, 50, 60) est réalisé sous la forme d'un profilé extrudé, doté d'au moins une chambre creuse (41, 41' ; 47, 47', 47"), qui s'étend dans la direction longitudinale de celui-ci.

3. Module avant selon revendication 1 ou 2, **caractérisé en ce que** le profilé métallique creux (3, 10, 20, 22, 27, 31, 33, 35, 37, 43, 50, 60) et la pièce d'appui en matière synthétique (8, 18, 56, 63) présentent, sur une face inversée l'une par rapport à l'autre, une cavité (34, 38, 44) et / ou une saillie (23, 39), sachant que la saillie (23, 39) est fixée dans la cavité (34, 38, 44) par fusion de matière.

4. Module avant selon l'une la revendication 3, **caractérisé en ce que** la cavité (34, 38, 44) est la saillie (23, 39) du profilé métallique creux (3, 10, 20, 22, 27, 31, 33, 35, 37, 43, 50, 60), respectivement de la pièce d'appui en matière synthétique (8, 18, 56, 63) s'étendent, en forme de bandes, dans la direction longitudinale (L) du profilé métallique creux (3, 10, 20, 22, 27, 31, 33, 35, 37, 43, 50, 60).

5. Module avant selon l'une des revendications 1 à 4, **caractérisé en ce que** le contour de fixation du profilé creux métallique, rectangulaire (3, 10, 20, 22, 27, 31, 33, 35, 37, 43, 50, 60) s'étend sur une face inférieure (10), orientée vers la pièce d'appui en matière synthétique (8, 18, 56, 63) ou dans une zone d'angle (28) entre la face inférieure (10) et un côté étroit adjacent (11).

6. Module avant selon la revendication 4, **caractérisé en ce que**, dans la région de la saillie en forme de bande (23, 39) ou de la cavité en forme de bande (34, 38, 44) du profilé creux métallique (3, 10, 20, 22, 27, 31, 33, 35, 37, 43, 50, 60), la pièce d'appui en matière synthétique (8, 18, 56, 63) porte, avec une surface de base (25) contre la face inférieure (10) et / ou la surface biseautée (29) du profilé creux métallique (3, 10, 20, 22, 27, 31, 33, 35, 37, 43, 50, 60), qui est plus étroite qu'une largeur (b1) de la face inférieure (10) du profilé creux métallique (3, 10, 20, 22, 27, 31, 33, 35, 37, 43, 50, 60).

7. Module avant selon la revendication 6, **caractérisé en ce que** la surface de base (25) de la pièce d'appui en matière synthétique (8, 18, 56, 63) présente des bords marginaux (26) latéraux, qui, s'étendant dans la direction longitudinale, sont distancés les uns des autres d'un intervalle (b2), qui est plus petit que la demi largeur (b1) de la face inférieure (10) du profilé creux métallique (22).

8. Module avant selon la revendication 3, **caractérisé en ce qu'**une longueur (1), perpendiculaire au profilé creux métallique (3, 10, 20, 22, 27, 31, 33, 35, 37, 43, 50, 60), de la cavité (34, 38, 44) et / ou de la saillie (23, 39) et / ou d'une pluralité de cavités (34, 38, 44) et / ou de saillies (23, 39) est prévue en fonction d'une largeur (b1) du profilé creux métallique (3, 10, 20, 22, 27, 31, 33, 35, 37, 43, 50, 60).

9. Module avant selon la revendication 4, **caractérisé en ce que** les cavités en forme de bande (34, 38, 44) et / ou les saillies en forme de bande (23, 39) du profilé creux métallique (3, 10, 20, 22, 27, 31, 33, 35, 37, 43, 50, 60) sont pourvues de barbes (24)

10. Module avant selon la revendication 3, **caractérisé en ce qu'**un plan médian, longitudinal (V) de la saillie (23, 39), respectivement de la cavité (34, 38, 44) du profilé creux métallique (3, 10, 20, 22, 27, 31, 33, 35, 37, 43, 50, 60) s'étend perpendiculairement à la face inférieure de celui-ci.

11. Module avant selon la revendication 3, **caractérisé en ce que** la cavité (34, 38, 44) et / ou la saillie (23, 39) du profilé creux métallique (50, 60) est réalisé de sorte que ledit profilé creux métallique (50, 60) sois relié par enclenchement ou par vissage à la pièce d'appui en matière synthétique (56, 63).
